# EUROPEAN PATENT APPLICATION

(11) **EP 2 522 778 A1**
(43) Date of publication of application: **14.11.2012**
(21) Application number: 10842097.7
(22) Date of filing: 08.01.2010
(51) Int. Cl.: E01F 9/015, G02B 5/08

(54) **ANTIFOGGING TRAFFIC MIRROR**

(71) Applicant: Sekisui Jushi Kabushiki Kaisha, Osaka-shi, Osaka 530-8565 (JP)
(72) Inventor: TAKAMURO, Kazutoshi, Gamo-gun Shiga 520-2596 (JP); KIZAKA, Kiyoshi, Gamo-gun Shiga 520-2596 (JP); YOKOZAWA, Masami, Azumino-shi Nagano 399-8301 (JP); BEKKER, John Den, NL-6089 NT Heibloem (NL)
(74) Representative: Isarpatent
(86) International application number: PCT/JP2010/050139
(87) International publication number: WO 2011/083580

(57) **Abstract**

An object is to provide an antifogging traffic mirror which can avoid a problem that an image reflected on a mirror surface becomes difficult to see or cannot be seen due to occurrence of dew condensation or freezing thereof. Provided is an antifogging traffic mirror, which include a mirror body 2, and a back plate 3, wherein a photocatalyst-containing layer 2G is formed on a mirror surface of the mirror body 2, a heat storage material 4 is provided between the mirror body 2 and the back plate 3, the back plate 3 is made of metal, and includes a mounting portion 7 that mounts a mounting bracket 6 to the back plate 3, the mounting portion 7 is formed projecting outward in a thickness direction of the back plate 3 at a predetermined position of the back plate 3, and a heat insulation material 12 is fitted into a space 7H formed inside the projecting mounting portion 7.

## Description

### FIELD OF THE INVENTION

The present invention relates to an antifogging traffic mirror installed outdoors at a place with poor visibility such as an intersection, for example.

### RELATED ART

An antifogging traffic mirror in which a photocatalyst-containing layer is formed on a mirror surface of a mirror body has been already proposed. For example, even when a surface temperature of the mirror body is reduced below an ambient temperature to cause dew condensation on the mirror surface, dew condensation water droplets on the mirror surface come into contact with each other to assume a film-like form by the action of the photocatalyst-containing layer on the mirror surface, thereby avoiding a problem that an image reflected on the mirror surface becomes difficult to see, when the photocatalyst-containing layer is provided as described above (for example, see Patent Document 1).

### CITATION LIST

### Patent Document

Patent Document 1: Japanese Patent No. 3634630 (cf., FIG. 2)

### DISCLOSURE OF THE INVENTION

### PROBLEMS TO BE SOLVED BY THE INVENTION

Even with the antifogging traffic mirror in Patent Document 1 described above, a problem may occur in a situation as described below. That is, when the surface temperature of the mirror body is reduced to 0°C or below (below the freezing point), the dew condensation water droplets assuming the film-like form as described above freeze, thereby causing a problem that an image reflected on the mirror surface becomes difficult to see or cannot be seen.

In view of the aforementioned problem, it is an object of the present invention to provide an antifogging traffic mirror which can avoid a problem that an image reflected on a mirror surface becomes difficult to see or cannot be seen due to occurrence of dew condensation or freezing thereof.

### MEANS FOR SOLVING PROBLEMS

To achieve the above object, an antifogging traffic mirror according to the present invention includes a mirror body, and a back plate, wherein a photocatalyst-containing layer is formed on a mirror surface of the mirror body, and a heat storage material is provided between the mirror body and the back plate.

Since the photocatalyst-containing layer is formed on the mirror surface of the mirror body as described above, the mirror surface is hydrophilized by the action of the photocatalyst-containing layer even when dew condensation occurs on the mirror surface. Dew condensation water droplets generated on the mirror surface come into contact with each other to assume a film-like form without remaining as fine water droplets, thereby avoiding a problem that an image reflected on the mirror surface becomes difficult to see. Also, since the heat storage material releases heat, a temperature of the mirror surface is hardly reduced to 0°C or below (below the freezing point), and the mirror surface is prevented from freezing even when rain water or the like adheres to the mirror surface, thereby avoiding a situation that an image reflected on the mirror surface becomes difficult to see or cannot be seen. Also, even when snow falls, such an advantage can be expected that visibility is maintained by melting snow adhering to the mirror surface by the heat released from the heat storage material.
Even though the occurrence of dew condensation on the mirror surface is suppressed by providing the heat storage material as described above, dew condensation may occur on the mirror surface in some cases due to changes in ambient temperature, humidity, and sunshine conditions even when the heat storage material is provided. Also, since the heat storage material as described above stores heat by absorbing heat from the mirror surface at the stage of storing heat after releasing heat, the heat storage material may induce the occurrence of dew condensation on the mirror surface in some cases by acting to cool the mirror surface. The above phenomenon tends to occur just after the dawn of day. Even when dew condensation occurs due to the factors as described above, good visibility can be maintained for the mirror surface because of the above hydrophilizing action of the photocatalyst-containing layer on the mirror surface.

Also, in the antifogging traffic mirror according to the present invention, the back plate may be made of metal, and include a mounting portion that mounts a mounting bracket to the back plate, the mounting portion may be formed projecting outward in a thickness direction of the back plate at a predetermined position of the back plate, and a heat insulation material may be fitted into a space formed inside the projecting mounting portion.

In the above configuration, since the projecting mounting portion is provided, the strength of the back plate can be equalized over an entire region of the back plate by increasing the strength of a portion particularly requiring the strength in the mounting portion while the back plate has a uniform plate thickness over the entire region. Moreover, the heat insulation material arranged in the space formed inside the mounting portion can reliably prevent the heat from the heat storage material from being released outside through the metal mounting portion from the back plate.

Also, the antifogging traffic mirror according to the present invention may further include a cover member that covers the mounting portion into which the heat insulation material is fitted from the heat insulation material side, wherein the cover member may be provided such that a surface of the cover member on the heat insulation material side and a surface of the back plate on the heat insulation material side excluding the mounting portion are flush with or substantially flush with each other.

When the cover member is provided such that the surface of the cover member close to the heat insulation material and the surface of the back plate close to the heat insulation material excluding the mounting portion are flush with or substantially flush with each other as described above, there is an advantage that a pressing force for pressing the heat storage material can be easily maintained constant at any position on the surface of the back plate close to the heat insulation material that presses the heat storage material.

Also, in the antifogging traffic mirror according to the present invention, the mounting bracket may be mounted to the back plate via a threaded member.

When the bracket is mounted to the back plate via the threaded member as described above, the heat insulation material can effectively prevent the heat from the heat storage material from being released particularly through the threaded member.

### ADVANTAGES OF THE INVENTION

The present invention can provide the antifogging traffic mirror which can avoid the problem that the image reflected on the mirror surface becomes difficult to see or cannot be seen due to the occurrence of dew condensation or the freezing thereof since the photocatalyst-containing layer is formed on the mirror surface of the mirror body, and the heat storage material is provided between the mirror body and the back plate.

### BRIEF DESCRIPTION OF THE DRAWINGS

FIG. 1 is a front view of an antifogging traffic mirror.
FIG. 2 is a sectional view taken along a line A-A in FIG. 1.
FIG. 3 is a sectional view taken along a line B-B in FIG. 1.
FIG. 4 is a vertical sectional view illustrating another embodiment of the antifogging traffic mirror.

### DETAILED DESCRIPTION OF THE PREFERRED EMBODIMENT

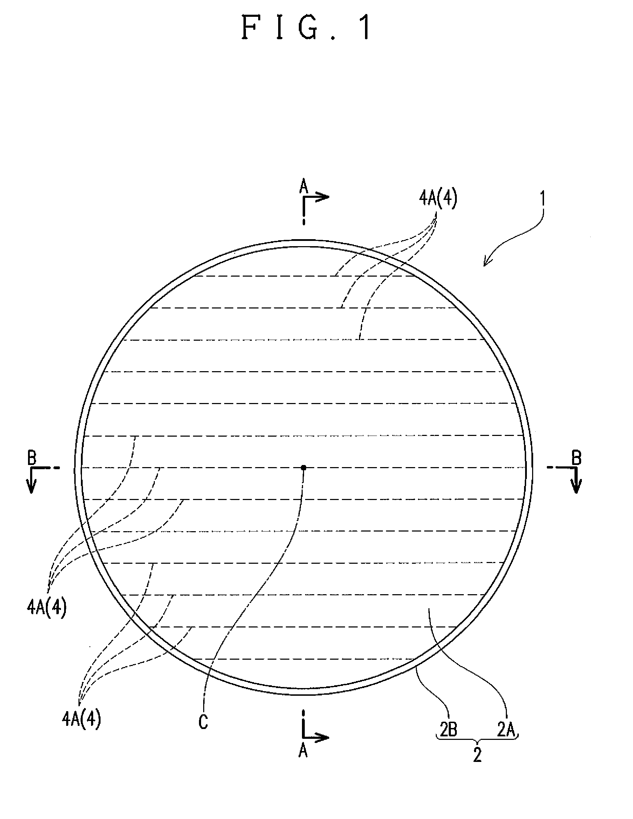

FIGS. 1 to 3 show an antifogging traffic mirror (referred to as mirror below) 1 according to the present invention. The mirror 1 is mounted to an upper end portion of a pole P and used at a road intersection or near a corner, for example.

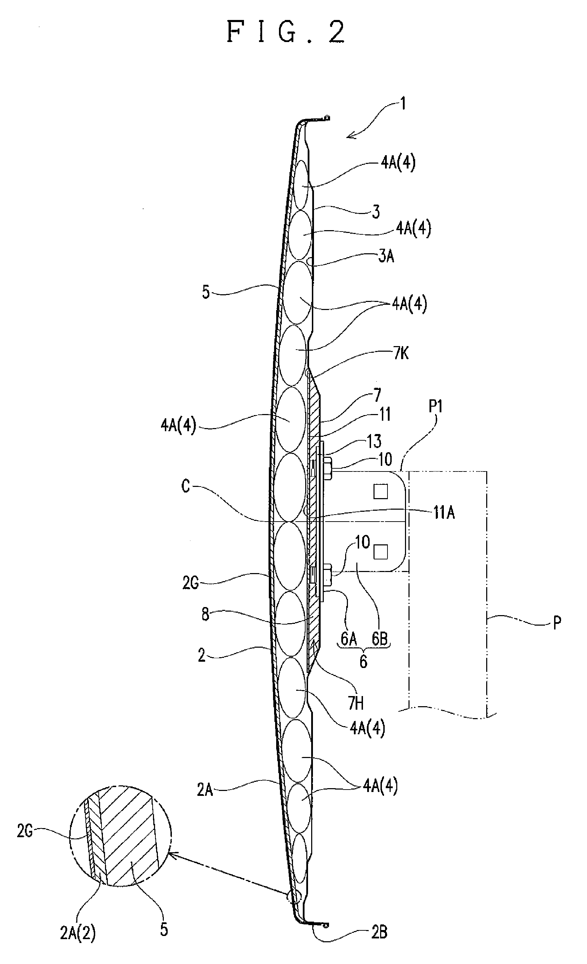

The mirror 1 includes a mirror body 2 formed in a circular shape in front view in FIG. 1 and in an arc shape in which the mirror body 2 is curved to project frontward toward a center C in FIG. 2, and a circular back plate 3 to which the mirror body 2 is fixed via a rivet.

The mirror body 2 includes a body 2A in which a mirror surface is formed on a surface by mirror finishing, and a bend portion 2B obtained by bending an outer circumferential portion of the body 2A backward at 90° (any angle may be employed). The shape of the mirror body 2 is not limited to the circular shape, and may be also a rectangular shape. Although the circular mirror body 2 has a size of, for example, 600 mm, 800 mm, 1000 mm or the like in diameter in the case of the circular shape, the mirror body 2 may also have a different size. Although the mirror body 2 has a size of, for example, 450 mmx600 mm, 600 mm×800 mm or the like in the case of the rectangular shape, the mirror body 2 may also have a different size. Although a convex mirror having a curvature radius of, for example, 1500 mm, 2200 mm, 3000 mm, 3600 mm or the like is employed as the mirror surface of the mirror body 2, a convex mirror having a different curvature radius may be also employed.

Any material including metal such as stainless steel, synthetic resin such as acrylic or polycarbonate resin, or glass may be used as a material constituting the body 2A. However, since the material preferably has a good heat conduction property and an excellent anti-rust effect, stainless steel is preferably used. When the body 2A is made of stainless steel, the mirror surface can be formed on the surface by surface polishing, and when the body 2A is made of synthetic resin or glass, the mirror surface may be formed on the surface of the body 2A by laminating a mirror body thereon. A method of forming the mirror body is not particularly limited.

As shown in FIG. 2, a photocatalyst-containing layer 2G is formed with a predetermined thickness on the mirror surface formed on the mirror body 2. Even when a surface temperature of the mirror body 2 is reduced below an ambient temperature to cause dew condensation on the mirror surface, dew condensation water droplets come into contact with each other to assume a film-like form by the action of the photocatalyst-containing layer 2G, thereby avoiding a problem that an image reflected on the mirror surface becomes difficult to see.

The photocatalyst-containing layer 2G has a layer thickness in a range of 30 to 2000 nm, and preferably in a range of 50 to 1000 nm. Also, the photocatalyst-containing layer 2G is generally a titania layer containing titanium dioxide. Although the titania layer is formed by applying a coating composition for forming a titania film to the mirror surface by an appropriate method such as spray coating, dip coating, spin coating, flow coating, and roll coating, and transforming the coating composition into the titania layer, another formation method may be also employed. In the titania layer as described above, titanium dioxide is activated by irradiation with ultraviolet rays having a wavelength range of about 300 nm to 400 nm. The durability of catalyst activity of the photocatalyst-containing layer 2G may be improved by forming a silicone coating between the photocatalyst-containing layer 2G and the mirror surface.

A heat storage material 4 is also provided between the mirror body 2 and the back plate 3. The heat storage material 4 stores heat from sunlight and releases the heat even when the mirror surface temperature is reduced to 0°C or below (below the freezing point), so that the mirror surface temperature is not reduced below the ambient temperature, and dew condensation can be prevented from occurring on the mirror surface. Also, even when rain water or the like adheres to the mirror surface, the heat storage material 4 storing heat from sunlight releases the heat, and can thereby inhibit the freezing of the mirror surface. Accordingly, since the occurrence of dew condensation freezing on the mirror surface can be suppressed or the freezing of the mirror surface can be inhibited, it is possible to reliably avoid the problem that the image reflected on the mirror surface becomes difficult to see or cannot be seen.

The heat storage material 4 is composed of a plurality of (12 in the drawings) vertically-arranged heat storage bodies 4A in each of which water is enclosed in a horizontally-long plastic bag made of synthetic resin. Each of the heat storage bodies 4A is formed in a size substantially matching a horizontal width of the mirror body 2, and arranged over a substantially entire region of the mirror body 2. To prevent water in the plastic bag from decaying, a liquid obtained by boiling and cooling water once, and adding an appropriate amount of iodine tincture to the cooled water may be used. A liquid obtained by adding a predetermined amount of agar powder to a water solution in which propylene glycol is added at a predetermined ratio to water and thereby turning the water solution into a gel may be also used. The heat storage material 4 may have any configuration, and metal with a high heat storage property may be also used as the heat storage material 4. Although the heat storage material 4 in the present embodiment is obtained by arranging the heat storage bodies 4A one by one, an integral heat storage material obtained by vertically connecting the plurality of heat storage bodies 4A may be also arranged. Although the heat storage material 4 is composed of the horizontally-long bags formed in the size substantially matching the horizontal width of the mirror body 2, the heat storage material 4 may be also composed of square bags arranged in the vertical and horizontal directions, or if need arises, may be composed of vertically-long bags.

A heat transfer reduction material (a heat reserving material) 5 that reduces the release of heat from the heat storage material 4 toward the mirror body 2 to extend a heat release time from the heat storage material 4 is arranged between the heat storage material 4 and the mirror body 2. The heat transfer reduction material 5 may have any configuration such as an air mattress and a foam material as long as the heat release time from the heat storage material 4 can be extended. Although the heat transfer reduction material 5 and the mirror body 2 are in a contact state with each other with no gap (no air space) therebetween in FIG. 2, there may exist a gap, that is, an air space between the heat transfer reduction material 5 and the mirror body 2.

The back plate 3 is composed of a stainless steel plate or a hot-dip galvanized plate, and includes a mounting portion 7 that mounts a mounting bracket 6 at a predetermined position of the back plate 3, specifically, at a center portion of the back plate 3. The mounting portion 7 projects outward in a thickness direction of the back plate 3 in a conical shape, and can equalize the strength of the back plate 3 over an entire region of the back plate 3 by increasing the strength of a portion particularly requiring the strength in the mounting portion while the back plate 3 has a uniform plate thickness over the entire region. The mounting bracket 6 includes a disk portion 6A that contacts an outer surface (a back surface) of the mounting portion 7 and is fixed to the mounting portion 7 via bolts 10 and 10 described below, and a right and left pair of connection portions 6B and 6B that are welded to a back surface of the disk portion 6A and extend backward to be connected to a mounting piece P1 of the pole P. Although the mounting bracket 6 here is a mounting bracket for mounting the pole P, the mounting bracket 6 may be also used for mounting an object other than the pole P. The back plate 3 also includes a bend portion obtained by bending an outer circumferential portion backward at 90° (any angle may be employed) similarly to the mirror body 2. Accordingly, the bend portion 2B of the mirror body 2 is overlapped with the bend portion of the back plate 3 and fixed thereto via the rivet as described above.

A heat insulation material 8 is fitted into a space 7H formed inside the projecting mounting portion 7. The heat insulation material 8 is composed of a foam cushion of flexible urethane foam, polyethylene foam, rubber sponge or the like. The mounting bracket 6 is fixed to the mounting portion 7 by the plurality of bolts 10 and 10 as a metal threaded member that penetrates the mounting portion 7. To be more specific, the mounting bracket 6 is fixed to the mounting portion 7 by forming threaded holes in a bracket 13 fixed to an inner surface of the mounting portion 7 via a rivet, and screwing tips of the bolts 10 and 10 that sequentially penetrate the mounting bracket 6 and the mounting portion 7 into the threaded holes of the bracket 13. In the case of the fixing structure, while heat in the mirror 1 is easily discharged through the external mounting bracket 6 connected to the bolts 10 and 10, the heat insulation material 8 fitted into the space 7H as described above can prevent the heat in the mirror 1 from being transferred to the external mounting bracket 6 through the bolts 10 and 10 and thereby being released outside.

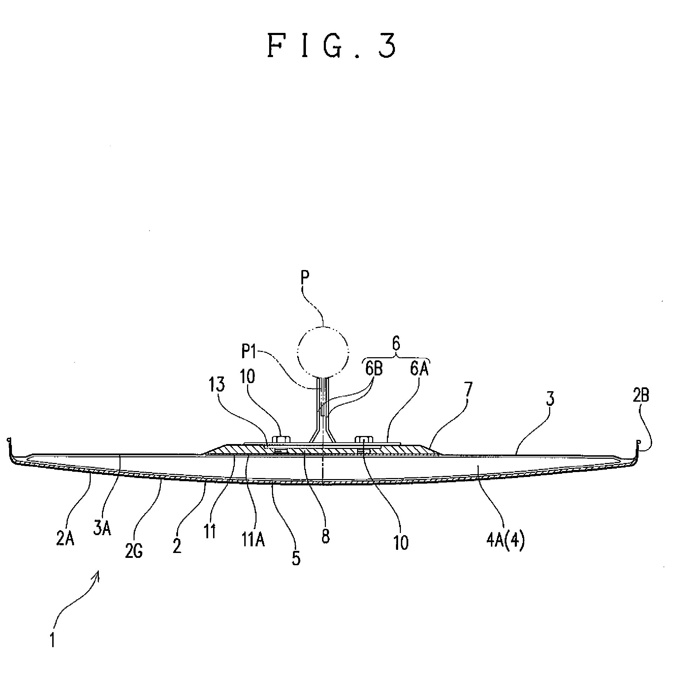

A cover member 11 is also provided as a disk-shaped partition member made of wood that covers from the side close to the heat insulation material an internal opening portion 7K of the mounting portion 7 into which the heat insulation material 8 is fitted. Since the cover member 11 is provided, a surface 11A of the cover member 11 on the heat insulation material side and a surface 3A of the back plate 3 on the heat insulation material side excluding the mounting portion 7 are made flush with each other (or substantially flush with each other) as shown in FIG. 3. Accordingly, a pressing force for pressing the heat storage material 4 can be easily maintained constant at any position on the surface of the back plate 3 on the heat insulation material side that presses the heat storage material 4.

Please note that the present invention is not limited to the aforementioned embodiment, and various changes may be made therein without departing from the scope of the present invention.

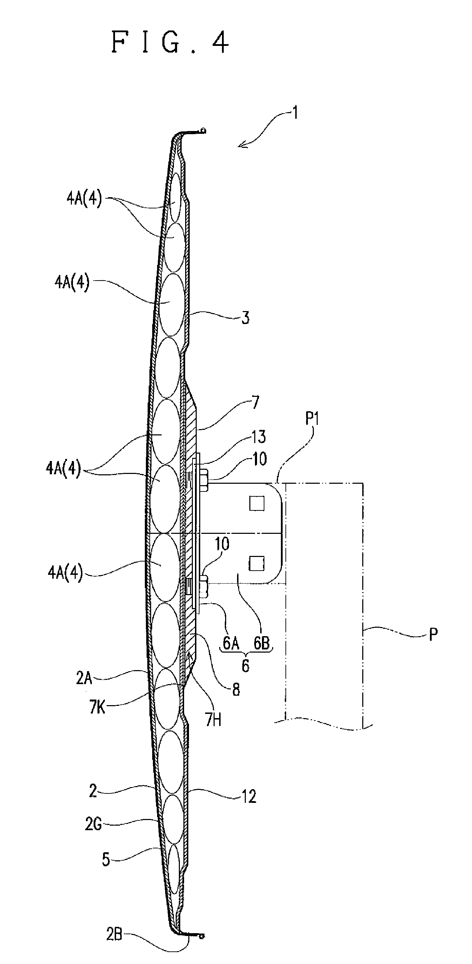

For example, a heat insulation material 12 composed of a foam sheet or the like may be further provided between the heat storage material 4 and the back plate 3 as shown in FIG. 4. By employing this configuration, the heat can be more favorably prevented from being released outside from the back plate 3. Since other portions in FIG. 4 are the same as those in FIG. 2, the same reference numerals are assigned thereto and the description thereof is omitted.

Although the mounting portion 7 is located at the center of the back plate 3 in the aforementioned embodiment, the mounting portion 7 may be also located at a position other than the center. The shape and the size of the mounting portion 7 may be also freely changed.

Although the configuration in which the mirror 1 is mounted to the pole P is described in the aforementioned embodiment, the mirror 1 may be also mounted to a structural object other than the pole.

Although the configuration in which the back plate 3 includes the mounting portion 7 that projects outward at the center is employed in the aforementioned embodiment, the back plate 3 may not include the mounting portion 7 projecting outward. When the back plate 3 does not include the mounting portion 7, the cover member 11 may be also eliminated.

### REFERENCE SIGNS LIST

1: Mirror, 2: Mirror body, 2A: Body, 2B: Bend portion, 2G: Photocatalyst-containing layer, 3: Back plate, 3A: Surface, 4: Heat storage material, 4A: Heat storage body, 5: Heat transfer reduction material, 6: Mounting bracket, 6A: Disk portion, 6B: Connection portion, 7: Mounting portion, 7H: Space, 7K: Internal opening portion, 8: Heat insulation material, 10: Bolt, 11:Cover member, 11A: Surface, 12: Heat insulation material, P: Pole, P1: Mounting piece

## Claims

1. An antifogging traffic mirror comprising a mirror body, and a back plate, wherein a photocatalyst-containing layer is formed on a mirror surface of the mirror body, and a heat storage material is provided between the mirror body and the back plate.

2. The antifogging traffic mirror according to claim 1, wherein the back plate is made of metal, and comprises a mounting portion that mounts a mounting bracket to the back plate, the mounting portion is formed projecting outward in a thickness direction of the back plate at a predetermined position of the back plate, and a heat insulation material is fitted into a space formed inside the projecting mounting portion.

3. The antifogging traffic mirror according to claim 2, further comprising a cover member that covers the mounting portion into which the heat insulation material is fitted from the heat insulation material side, wherein the cover member is provided such that a surface of the cover member on the heat insulation material side and a surface of the back plate on the heat insulation material side excluding the mounting portion are flush with or substantially flush with each other.

4. The antifogging traffic mirror according to claim 2 or 3, wherein the mounting bracket is mounted to the back plate via a threaded member.
